# EUROPÄISCHE PATENTSCHRIFT

(11) **EP 3 280 602 B1**
(45) Veröffentlichungstag und Bekanntmachung des Hinweises auf die Patenterteilung: **13.03.2019**
(21) Anmeldenummer: 16709787.2
(22) Anmeldetag: 14.03.2016
(51) Int. Cl.: B60G 21/055, H02K 5/22

(54) **AKTIVER WANKSTABILISATOR EINES KRAFTFAHRZEUGES UND VERFAHREN ZUR MONTAGE**
ACTIVE ROLL STABILIZER OF A MOTOR VEHICLE AND METHOD FOR ASSEMBLY
STABILISATEUR ANTIROULIS ACTIF D'UN VÉHICULE AUTOMOBILE ET PROCÉDÉ DE MONTAGE

(30) Priorität: 08.04.2015 DE 102015206274
(43) Veröffentlichungstag der Anmeldung: 14.02.2018
(73) Patentinhaber: ZF Friedrichshafen AG, 88046 Friedrichshafen (DE)
(72) Erfinder: PFEIFFER, Daniel, 88276 Berg (DE); HOFFMANN, Martin, 88048 Friedrichshafen (DE); HEBERLE, Boris, 88045 Friedrichshafen (DE)
(86) Internationale Anmeldenummer: PCT/EP2016/055412
(87) Internationale Veröffentlichungsnummer: WO 2016/162172

(56) Entgegenhaltungen:
- DE-A1-102013 215 859

## Beschreibung

Die Erfindung betrifft einen aktiven Wankstabilisator eines Kraftfahrzeuges nach dem Oberbegriff des Patentanspruches 1. Die Erfindung betrifft auch ein Verfahren zur Montage eines Kabelstranges nach dem Oberbegriff des Patentanspruches 12.

Durch die DE 10 2013 215 859 A1 der Anmelderin wurde ein als Schwenkmotor ausgebildeter elektromechanischer Stellantrieb für eine aktive Wankstabilisierung eines Kraftfahrzeuges bekannt. Der Schwenkmotor, auch Aktuator genannt, umfasst einen Elektromotor mit Planetengetriebe und ist stirnseitig mit einem Kabelstrang, bestehend aus Leistungskabeln und einem Signal- oder Sensorkabel, verbunden. Der Kabelstrang weist ein erstes Ende auf, welches über einen ersten Anschluss bzw. ersten Stecker mit dem Aktuator verbunden ist, und erstreckt sich vom ersten Anschluss bogenförmig um die Längsachse des Aktuators bis zu seinem zweiten Ende, welches als zweiter Stecker ausgebildet und fahrzeugseitig fixiert ist. Der Aktuator und damit das erste Ende des Kabelstranges führt bei aktiver Wankstabilisierung eine Dreh- oder Schwenkbewegung um die Längsachse aus, während das zweite Ende des Kabelstranges ortsfest angeordnet ist. Dadurch ergibt sich das so genannte Kabelatmen, d. h. eine Veränderung der Krümmung des Kabelstranges zwischen beiden Enden, wobei sich durch die Dreh- bzw. Schwenkbewegung in eine Richtung ein Aufstauchen bzw. Abwickeln des Kabels, in die andere Richtung ein Aufwickeln bzw. Zug des Kabels ergibt.

Es ist eine Aufgabe der vorliegenden Erfindung, weitere Potentiale im Hinblick auf die Anbindung eines Kabelstranges an einen elektrischen Schwenkmotor eines aktiven Wankstabilisators auszuschöpfen.

Die Erfindung zeichnet sich durch die Merkmale der unabhängigen Patentansprüche 1 und 12 aus. Vorteilhafte Ausgestaltungen ergeben sich aus den Unteransprüchen.

Nach einem ersten Aspekt der Erfindung ist vorgesehen, dass der mit dem Gehäuse des Aktuators verbundene Deckel einen Trockenraum bildet und eine umfangseitig angeordnete Steckeraufnahmeöffnung aufweist, in welche der Stecker in radialer Richtung einführbar und befestigbar ist. Damit wird der Vorteil erreicht, dass der elektrische Anschluss des Kabelstranges auf Seiten des Aktuators mit einem minimalen Aufwand an Bauraum, insbesondere in axialer Richtung realisiert werden kann. Darüber hinaus ist es von Vorteil, dass die elektrischen Kontakte geschützt im Trockenraum, d. h. einem nach außen abgeschlossenen vor Korrosion geschütztem Raum angeordnet sind.

Erfindungsgemäß weist der Deckel eine Schnittstelle mit einem Stabilisatorende und eine im Bereich der Schnittstelle angeordnete Montageöffnung auf, welche einen Zugang zu den Kontakten bildet. Damit wird erreicht, dass die elektrischen Kontakte - nach dem radialen Einführen des Steckers in den Trockenraum - über den Zugang durch die stirnseitig angeordnete Montageöffnung befestigt werden können. Damit wird eine dauerhafte elektrische Kontaktierung zwischen dem Elektromotor bzw. dem integrierten Steuergerät und dem Bordnetz des Fahrzeuges hergestellt.

Nach einer weiteren bevorzugten Ausführungsform ist der Stecker als Winkelstecker ausgebildet, welcher einen radialen, von der Steckeraufnahmeöffnung aufgenommenen Schenkel und einen axialen, außerhalb der Steckeraufnahmeöffnung angeordneten Schenkel aufweist. Durch den Winkelstecker wird der Kabelstrang um etwa 90 Grad umgelenkt, d. h. aus einer radialen Richtung innerhalb des Deckels in eine axiale Richtung außerhalb des Deckels. Damit wird eine bezüglich des Bauraumes optimierte Anbindung und Kontaktierung des Kabelstranges erreicht.

Nach einer weiteren bevorzugten Ausführungsform wird der Winkelstecker durch Umspritzen des abgewinkelten Kabelstranges oder der gebogenen Kabel hergestellt. Damit wird die Umlenkung des Kabelstranges in einem festen Kunststoffkörper fixiert, und die einzelnen Kabel sind im Bereich der Biegung entlastet.

In einer weiteren Ausführungsform kann die Abwinklung der Kontakte über ein Stanzgitter realisiert werden. Die Leitungen werden dann in der Umspritzung an das Stanzgitter angebunden.

Nach einer weiteren bevorzugten Ausführungsform wird der Kabelstrang aus dem axialen Schenkel herausgeführt und in axialer Richtung auf dem Gehäuse verlegt, d. h. die Kabelführung schmiegt sich an das zylindrische Gehäuse des Aktuators an, so dass nur ein minimaler Bauraum beansprucht wird.

Nach einer weiteren bevorzugten Ausführungsform wird der Kabelstrang in axialer Richtung zunächst bis zu einem Umlenkbereich geführt, wo er eine Umlenkung erfährt. Der Umlenkpunkt kann - je nach Einbaubedingungen - an beliebiger Stelle in Bezug auf die Längserstreckung des Aktuatorgehäuses angeordnet sein, vorzugsweise in der Mitte. Die Umlenkung kann quer, also mit etwa 90 Grad oder auch schräg, d. h. in einem spitzen oder stumpfen Winkel, bezogen auf die Axialrichtung, erfolgen, d. h. jeweils in Richtung auf den ortsfest im Fahrzeug angeordneten Kabelübergabepunkt.

Nach einer weiteren bevorzugten Ausführungsform wird der auf dem Gehäuse verlegte Kabelstrang durch ein entsprechend ausgebildetes Mantelblech geführt und fixiert, wobei das Mantelblech gegenüber dem Gehäuse verspannt bzw. fixiert wird. Das Mantelblech übernimmt somit mindestens drei Funktionen, nämlich neben der Führung, die Befestigung und den Schutz des Kabelstranges.

Nach einer weiteren bevorzugten Ausführungsform erstreckt sich das Mantelblech, zumindest bereichsweise über mehr als die Hälfte des Umfanges des Gehäuses, so dass es bei elastischer Verformung auf dem Gehäuse positioniert und vorfixiert ist. Danach erfolgt die Befestigung des Mantelbleches, vorzugsweise durch das Gehäuse umgreifende Spannbänder. Das Mantelblech kann alternativ stoffschlüssig (z. B. durch Kleben oder Schweißen) oder mittels Fixierelementen formschlüssig durch Nieten oder Schrauben an dem Gehäuse befestigt sein.

Nach einer weiteren bevorzugten Ausführungsform weist das Mantelblech eine Abdeckkappe auf, welche der Form des aus der Steckeraufnahmeöffnung herausragenden Winkelsteckers angepasst ist und diesen wie eine Kappe übergreift. Damit wird der äußere Teil des Winkelsteckers insbesondere gegen äußere Einwirkung und Beschädigungen geschützt.

Nach einer weiteren bevorzugten Ausführungsform weist das Mantelblech eine in Längsrichtung der Kabel verlaufende Ausprägung auf, welche in ihrem Querschnitt dem Querschnitt des Kabelstranges angepasst ist und diesen somit in sich aufnimmt. Der Kabelstrang wird somit durch die rinnenartige Ausprägung auf dem Gehäuse geführt und fixiert.

Nach einer weiteren bevorzugten Ausführungsform erstreckt sich die Ausprägung über den gesamten Verlauf des Kabelstranges auf dem Gehäuse und weist einen axial verlaufenden Bereich, einen Umlenkbereich und einen quer oder schräg zur axialen Richtung verlaufenden Abgangsbereich auf. Somit ist der Kabelstrang vom Winkelstecker bis zum Abgangsbereich eng am Gehäuse geführt und fixiert. Mit Hilfe dieser Ausführung wird der Kabelstrang spiralförmig zum ortsfesten KabelÜbergabepunkt geführt.

Nach einem weiteren Aspekt der Erfindung sind bei einem Verfahren zur Montage des Kabelstranges folgende Verfahrensschritte vorgesehen: zunächst werden Aktuator und Kabelstrang bereitgestellt, wobei der Aktuator einen Deckel mit Steckeraufnahmeöffnung und Montageöffnung und der Kabelstrang ein erstes Ende mit Stecker aufweist. Im nächsten Schritt wird der radiale Schenkel des Steckers in radialer Richtung in die Steckeraufnahmeöffnung eingeführt, d. h. einschließlich der am Ende des radialen Schenkels herausragenden elektrischen Kontakte der einzelnen Kabel. In einem weiteren Schritt werden - über den Zugang durch die Montageöffnung - die elektrischen Kontakte montiert und befestigt, so dass eine dauerhafte elektrische Verbindung zum Elektromotor bzw. zum Steuergerät hergestellt ist. Die elektrischen Endkontakte können beispielsweise als Kontaktösen ausgebildet sein, welche über axial ausgerichtete Kontaktbolzen geschoben und an diesen befestigt werden können.

In einem weiteren Schritt, der auch bereits vorher erfolgt sein kann, wird der Stecker gegenüber der Steckeraufnahmeöffnung abgedichtet fixiert und fest montiert. Das Abdichten erfolgt beim Einführen des Steckers, das Fixieren durch Fixiermittel, z. B. Fixierstifte.

In einem weiteren Verfahrensschritt wird der aus dem axialen Schenkel des Winkelsteckers herausgeführte Kabelstrang auf dem Gehäuse in der gewünschten Richtung verlegt und durch Positionieren eines Mantelbleches geführt und fixiert. Der Kabelstrang wird somit durch Aufsetzen des Mantelbleches formschlüssig mit dem Gehäuse verbunden.

In einem weiteren Verfahrensschritt wird das Mantelblech gegenüber dem Gehäuse verspannt, vorzugsweise durch Spannbänder, welche einfach zu montieren sind.

Nach einer weiteren bevorzugten Variante wird eines der beiden Stabilisatorenden im Bereich der Schnittstelle des Deckels stoffschlüssig mit dem Deckel verbunden, vorzugsweise durch Verschweißen. Damit ist die Montageöffnung geschlossen, und der Trockenraum, in welchem die elektrischen Kontakte angeordnet sind, ist nach außen abgeschlossen und abgedichtet.

Nach einer weiteren bevorzugten Variante wird anschließend das zweite, noch lose Ende des Kabelstranges im Bereich des Kabelübergabepunktes mit dem Bordnetz des Fahrzeuges durch eine geeignete Steckverbindung verbunden. Damit ist der Aktuator als aktiver Wankstabilisator funktionsfähig, und der flexible Kabelstrang kann bei den im Betrieb auftretenden Schwenkbewegungen des Aktuators "atmen", d. h. den Schwenkbewegungen ohne eine unzulässige mechanische Beanspruchung folgen.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: einen Kabelstrang mit erfindungsgemäßem Stecker,
- Fig. 2: einen Aktuator mit Deckel, den Kabelstrang mit Stecker sowie ein Mantelblech in Explosionsdarstellung,
- Fig. 3: eine Ansicht in axialer Richtung auf den Deckel mit Montageöffnung,
- Fig. 4: den Aktuator mit angeschlossenem Kabelstrang und Stabilisatorhälften,
- Fig. 5: einen Axialschnitt durch den Stecker und
- Fig. 6: einen Querschnitt durch das Mantelblech mit Kabelstrang.

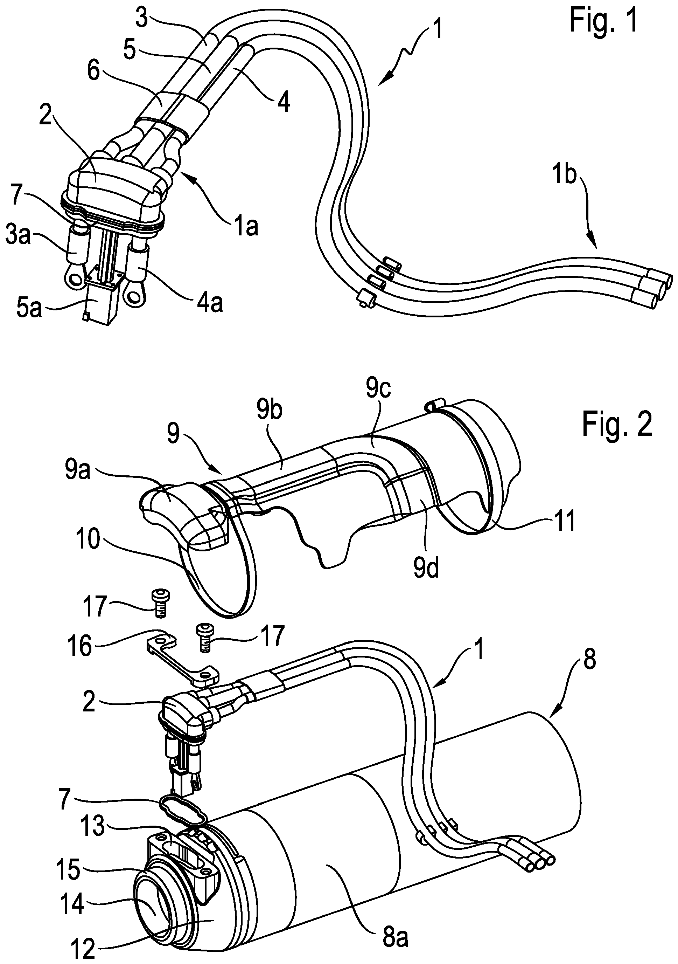

Fig. 1 zeigt einen Kabelstrang 1 mit einem Stecker 2 für einen hier nicht dargestellten Aktuator. Der Kabelstrang 1 umfasst hier beispielhaft drei Kabel, nämlich ein erstes Leistungskabel 3, ein zweites Leistungskabel 4 sowie ein Signalkabel 5, welche durch eine Bandage 6 zusammengehalten werden. Der Kabelstrang 1 weist ein erstes Ende 1a, welches in dem Stecker 2 aufgenommen ist, sowie ein zweites Ende 1b, welches an einem hier nicht dargestellten Kabelübergabepunkt angeschlossen ist, auf. Den Leistungskabeln 3, 4 sind am Stecker 2 angeordnete Leistungskontakte 3a, 4a, auch elektrische Kontakte genannt, zugeordnet, während dem Signalkabel 5 ein Signalstecker 5a, auch als Signalkontakt 5a bezeichnet, zugeordnet ist. Auf dem Umfang des Steckers 2 ist eine umlaufende Dichtung 7 angeordnet.

Fig. 2 zeigt in einer Explosionsdarstellung einen als elektrischen Schwenkmotor ausgebildeten Aktuator 8, auch Steller genannt, den Kabelstrang 1 mit Stecker 2 sowie ein Mantelblech 9 mit Spannbändern 10, 11. Der Aktuator 8 weist ein etwa zylindrisches Gehäuse 8a auf, welches stirnseitig mit einem etwa kegelstumpfförmig ausgebildeten Deckel 12 verbunden ist, der auf seinem Umfang eine als Durchbruch ausgebildete Steckeraufnahmeöffnung 13 und auf seiner Stirnseite eine Montageöffnung 14 aufweist. Die kreisförmig ausgebildete Montageöffnung 14 wird von einer kreisringförmigen Fläche 15 begrenzt, welche eine Schnittstelle mit einem hier nicht näher dargestellten Ende einer ersten Stabilisatorhälfte bildet. Das Mantelblech 9, welches als Blechformteil oder auch als Kunststoffteil ausgebildet sein kann, ist im Wesentlichen halbzylindrisch ausgebildet und in seinem Radius dem Radius des Gehäuses 8a des Aktuators 8 angepasst. Stirnseitig weist das Mantelblech 9 eine angeformte Kappe 9a auf, welche der Form des Steckers 2 angepasst ist. Das Mantelblech 9 weist ferner eine rinnenartig ausgebildete, abgebogene Ausprägung 9b, 9c, 9d auf, welche dem Verlauf des Kabelstranges 1 angepasst ist. Ein axial verlaufender Bereich 9b geht über einen gekrümmten oder Umlenkbereich 9c in einen quer verlaufenden Abgangsbereich 9d über.

Fig. 2 lässt auch deutlich erkennen, wie die Montage der dargestellten Teile erfolgen kann. Zunächst wird der Stecker 2 in radialer Richtung in die Steckeraufnahmeöffnung 13 eingeführt, wobei zusätzlich die Dichtung 7 montiert wird. Anschließend wird ein Fixier- oder Klemmblech 16 mittels Befestigungsschrauben 17 mit dem Deckel 12 verschraubt, so dass der Stecker 2 im Deckel 12 fixiert ist. Anschließend kann das Mantelblech 9 montiert werden, welches einerseits mit seiner Kappe 9a den Stecker 2 übergreift und andererseits den Kabelstrang 1 in seiner rinnenartigen Ausprägung 9b, 9c, 9d aufnimmt. Das Mantelblech 9 umfasst den Umfang des Gehäuses 8a und wirkt dabei als elastische Klammer, welche eine kraftschlüssige Verbindung mit dem Gehäuse 8a zwecks Vorfixierung herstellt. Anschließend können die Spannbänder 10, 11 montiert werden, welche das Mantelblech 9 und damit auch den Kabelstrang 1 formschlüssig mit dem Gehäuse 8a verbinden.

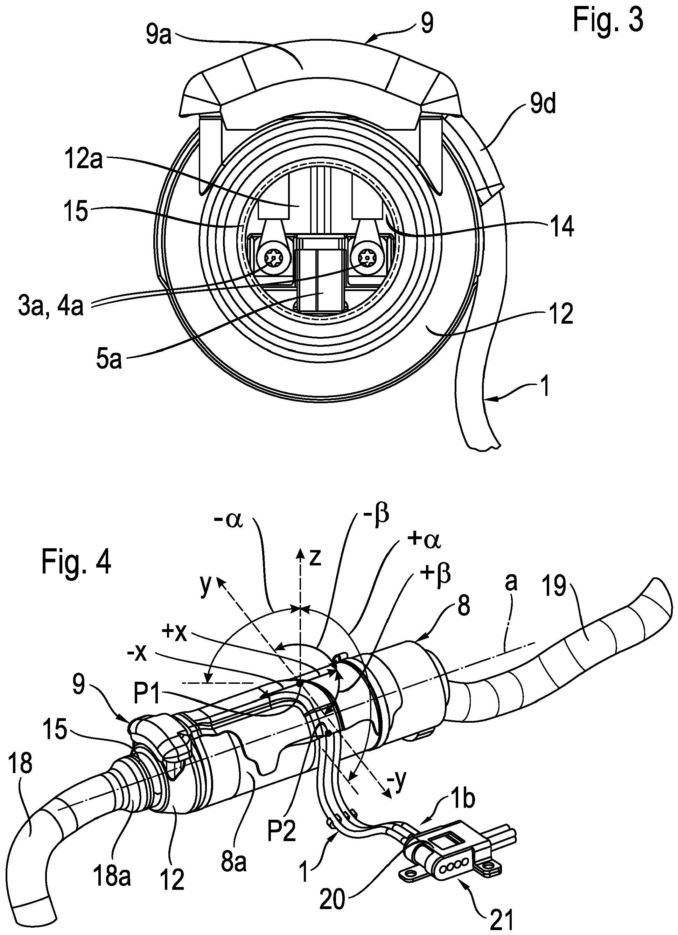

Fig. 3 zeigt eine Ansicht in axialer Richtung auf den Deckel 12 mit Montageöffnung 14. Im Bereich der kreisförmig ausgebildeten Montageöffnung 14 sind - in Axialrichtung gesehen - die beiden elektrischen Kontakte 3a, 4a der Leistungskabel 3, 4 sowie der Signalstecker 5a des Signalkabels 5 angeordnet, die somit in axialer Richtung über die Montageöffnung 14 zugänglich sind, beispielsweise mittels eines Schraubendreherwerkzeuges. Somit können die in radialer Richtung eingeführten Kontakte 3a, 4a sowie der Signalstecker 5a fertig montiert, d. h. dauerhaft befestigt werden, so dass eine elektrische Verbindung hergestellt ist. Da der Deckel 12 in seinem Inneren einen so genannten Trockenraum 12a bildet, sind die elektrischen Kontakte 3a, 4a und der Signalstecker 5a vor Feuchtigkeit und Schmutz geschützt. Die Montageöffnung 14 wird nach der Fertigmontage geschlossen, indem im Bereich der Schnittstelle 15 ein Stabilisatorende (Ende einer Stabilisatorhälfte) angeschweißt wird, was nachfolgend im Zusammenhang mit Fig. 4 erläutert und dargestellt ist.

Fig. 4 zeigt den Aktuator 8, der eine Längs- und Schwenkachse a aufweist, mit angeschweißten, unvollständig dargestellten Stabilisatorhälften 18, 19, welche Teil eines aktiven Wankstabilisators und mit ihren nicht dargestellten Enden mit den Radträgern einer Fahrzeugachse verbunden sind. Die erste, in der Zeichnung links dargestellte Stabilisatorhälfte 18 weist ein Stabilisatorende 18a auf, welches stumpf an der Schnittstelle 15 mit dem Deckel 12 verschweißt ist und somit die Montageöffnung 14 (Fig. 3) und das Innere des Deckels 12, den Trockenraum 12a, hermetisch abschließt. Die zweite Stabilisatorhälfte 19 ist mit einem nicht dargestellten Abtriebsglied des Aktuators 8 verbunden. Der Kabelstrang 1 ist mit seinem zweiten Ende 1b an einem ortsfesten Kabelübergabepunkt 20 über einen Anschluss 21 mit einer Stromquelle des Kraftfahrzeuges und einer nicht dargestellten Steuereinrichtung verbunden.

Die Verlegung des Kabelstranges 1 vom Aktuator 8 zum Kabelübergabepunkt 20, wie sie in der Zeichnung dargestellt ist, ist nur beispielhaft - der Kabelübergabepunkt 20 kann in Bezug auf die Lage des Aktuators 8 im Fahrzeug auch an anderer Stelle angeordnet sein, so dass sich für die Verlegung des Kabelstranges 1 Änderungen ergeben. Hierzu ist auf dem Gehäuse 8a ein Bezugspunkt P1 als Ursprung für die Koordinaten x, y, z eingezeichnet: Die Pfeile +x, -x bezeichnen die Axialrichtung bzw. eine Verschiebung des Bezugspunktes P1 in Richtung der Längsachse a. Der Winkel +α, -α bezeichnet einen positiven oder negativen Umfangswinkel oder ein Bogenmaß auf dem Umfang des Aktuatorgehäuses 8a, d. h. in einer y-z-Ebene. Im dargestellten Ausführungsbeispiel entspricht der Umfangswinkel +α dem Bogen zwischen dem Bezugspunkt P1 und einem weiteren Bezugspunkt P2, der die Übergabe oder den Abgang des Kabelstranges 1 markiert. Beim dargestellten Ausführungsbeispiel wäre der Umfangswinkel zwischen dem ersten und dem zweiten Bezugspunkt P1, P2 etwa 90 Grad. Ein dritter Winkel, bezeichnet mit +β, -β in Bezug auf die x-Richtung, steht für die Umlenkung des Kabelstranges 1 in einer x-y-Ebene. Im dargestellten Ausführungsbeispiel beträgt der Winkel β für die Umlenkung 90 Grad. Bei einer Änderung dieser Variablen x, α, β wird das Mantelblech 9, insbesondere die rinnenartige Ausprägung 9b, 9c, 9d (Fig. 2) entsprechend angepasst, so dass sich die gewünschte Führung des Kabelstranges 1 auf dem Gehäuse 8a ergibt.

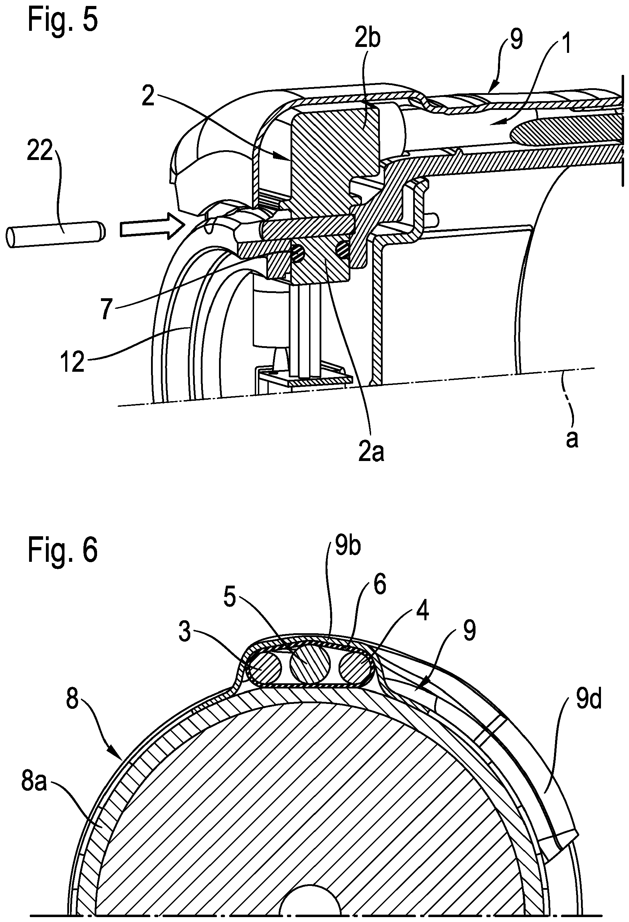

Fig. 5 zeigt den Stecker 2 mit Deckel 12 in einem Axialschnitt, d. h. in einer die Längsachse a einschließenden Schnittebene. Der Stecker 2 ist als Winkelstecker ausgebildet und weist einen radialen Schenkel 2a sowie einen axialen Schenkel 2b auf, wobei der radiale Schenkel 2a in der als Durchbruch ausgebildeten Steckeraufnahmeöffnung 13 aufgenommen ist. Umfangsseitig ist der radiale Schenkel 2a durch die als O-Ring ausgebildete Dichtung 7 gegenüber dem Deckel 12 abgedichtet. Abweichend von dem in Fig. 2 dargestellten Ausführungsbeispiel mit einem Klemmblech 16 ist der Stecker 2 hier durch einen Fixierstift 22, der etwa achsparallel ausgerichtet ist, in radialer Richtung fixiert. Der Winkelstecker 2 mit radialem und axialen Schenkel 2a, 2b ist als Kunststoffspritzteil ausgebildet, d. h. der im Bereich des Steckers 2 abgewinkelte Kabelstrang ist mit Kunststoff umspritzt. Man erkennt in dieser Schnittdarstellung auch die Abdeckung des Winkelsteckers 2 durch die Kappe 9a des Mantelbleches 9.

Fig. 6 zeigt einen Radialschnitt durch das Gehäuse 8a des Aktuators 8, das Mantelblech 9 sowie durch die Kabel 3, 4, 5 des Kabelstranges 1 im Bereich der Bandage 6 (vgl. Fig. 1). Der Querschnitt der rinnenartigen Ausprägung 9b ist hier deutlich zu erkennen: das Mantelblech 9 schmiegt sich in diesem Bereich eng an den durch die Bandage 6 zusammengehaltenen Kabelstrang 1 an und fixiert diesen somit gegenüber dem Gehäuse 8a. Erkennbar ist auch der sich in Umfangsrichtung erstreckende Abgangsbereich 9d der Ausprägung.

### Bezugszeichen

- 1: Kabelstrang
- 1a: erstes Ende
- 1b: zweites Ende
- 2: Stecker
- 2a: radialer Schenkel
- 2b: axialer Schenkel
- 3: erstes Leistungskabel
- 3a: elektrischer Kontakt
- 4: zweites Leistungskabel
- 4a: elektrischer Kontakt
- 5: Signalkabel
- 5a: Signalstecker
- 6: Bandage
- 7: Dichtung
- 8: Aktuator
- 8a: Gehäuse
- 9: Mantelblech
- 9a: Kappe
- 9b: Ausprägung (axialer Bereich)
- 9c: Ausprägung (Umlenkbereich)
- 9d: Ausprägung (Abgangsbereich)
- 10: Spannband
- 11: Spannband
- 12: Deckel
- 12a: Trockenraum
- 13: Steckeraufnahmeöffnung
- 14: Montageöffnung
- 15: Schnittstelle
- 16: Klemmblech
- 17: Schrauben
- 18: erste Stabilisatorhälfte
- 18a: Stabilisatorende
- 19: zweite Stabilisatorhälfte
- 20: Kabelübergabepunkt
- 21: elektrischer Anschluss
- 22: Fixierstift

- a: Längs- und Schwenkachse
- P1: erster Bezugspunkt
- P2: zweiter Bezugspunkt
- x: Axialrichtung, x-Achse
- y: y-Achse
- z: z-Achse
- α: Umfangswinkel
- β: Umlenkwinkel

## Patentansprüche

1. Aktiver Wankstabilisator eines Kraftfahrzeuges, umfassend einen um seine Längsachse (a) drehbeweglich im Fahrzeug angeordneten, als Schwenkmotor (8) ausgebildeten Aktuator (8), welcher ein im Wesentlichen zylindrisches Gehäuse (8a) mit einem Deckel (12) aufweist, zwei Stabilisatorhälften (18, 19), welche zur Übertragung eines Drehmoments stirnseitig mit dem Aktuator (8) verbunden sind, einen ein erstes und ein zweites Ende (1a, 1b) aufweisenden Kabelstrang (1), welcher Kabel (3, 4, 5) zur Übertragung von elektrischer Leistung und Signalen umfasst, wobei das erste Ende (1a) mittels eines Steckers (2) mit dem Aktuator (8) verbunden und das zweite Ende (1b) ortsfest im Fahrzeug an einem Kabelübergabepunkt (20) angeordnet ist, **dadurch gekennzeichnet, dass** der Deckel (12) einen Trockenraum (12a) bildet und eine umfangsseitig angeordnete Steckeraufnahmeöffnung (13) aufweist, in welche der Stecker (2) in radialer Richtung einführbar und befestigbar ist, wobei der Stecker (2) endseitig mit den Kabeln (3, 4, 5) korrespondierende Kontakte (3a, 4a, 5a) und der Deckel (12) eine Schnittstelle (15) mit einem Ende (18a) einer Stabilisatorhälfte (18) sowie eine stirnseitig im Bereich der Schnittstelle (15) angeordnete Montageöffnung (14) aufweist, welche einen Zugang für die Montage der Kontakte (3a, 4a, 5a) bildet.

2. Wankstabilisator nach Anspruch 1, **dadurch gekennzeichnet, dass** der Stecker als Winkelstecker (2) ausgebildet ist und einen radialen, von der Steckeraufnahmeöffnung (13) aufgenommenen Schenkel (2a) sowie einen axialen, außerhalb der Steckeraufnahmeöffnung (13) angeordneten Schenkel (2b) aufweist.

3. Wankstabilisator nach Anspruch 2, **dadurch gekennzeichnet, dass** der Winkelstecker (2) als Kunststoffspritzteil, welches durch Umspritzen des abgewinkelten Kabelstranges (1) herstellbar ist, ausgebildet ist.

4. Wankstabilisator nach Anspruch 2 oder 3, **dadurch gekennzeichnet, dass** der Kabelstrang (1) aus dem axialen Schenkel (2b) des Steckers (2) herausgeführt und in axialer Richtung auf dem Gehäuse (8a) verlegt ist.

5. Wankstabilisator nach Anspruch 4, **dadurch gekennzeichnet, dass** der Kabelstrang (1) vom Stecker (2) in axialer Richtung bis zu einem Umlenkbereich (9c) und hinter dem Umlenkbereich (9c) quer oder schräg zur axialen Richtung (x) in Richtung auf den Kabelübergabepunkt (20) verlegbar ist.

6. Wankstabilisator nach einem der Ansprüche 1 bis 5, **dadurch gekennzeichnet, dass** der auf dem Gehäuse (8a) verlegte Kabelstrang (1) durch ein Mantelblech (9) geführt und fixiert ist.

7. Wankstabilisator nach Anspruch 6, **dadurch gekennzeichnet, dass** das Mantelblech (9) bereichsweise mehr als die Hälfte des Umfanges des Gehäuses (8a) umgreift und mittels Spannelementen (10, 11) und/oder Fixierelementen mit dem Gehäuse (8a) verbunden ist.

8. Wankstabilisator nach Anspruch 6 oder 7, **dadurch gekennzeichnet, dass** das Mantelblech (9) eine angeformte Abdeckkappe (9a) aufweist, welche den Winkelstecker (2) übergreift.

9. Wankstabilisator nach Anspruch 6, 7 oder 8, **dadurch gekennzeichnet, dass** das Mantelblech (9) eine in Längsrichtung der Kabel (3, 4, 5) verlaufende Ausprägung (9b, 9c, 9d) zur Aufnahme und Fixierung des Kabelstranges (1) aufweist.

10. Wankstabilisator nach Anspruch 9, **dadurch gekennzeichnet, dass** die Ausprägung einen in axialer Richtung (x) verlaufenden Bereich (9b) und einen Umlenkbereich (9c) aufweist.

11. Wankstabilisator nach Anspruch 10, **dadurch gekennzeichnet, dass** die Ausprägung einen quer oder schräg zur axialen Richtung (x) verlaufenden Abgangsbereich (9d) aufweist, der sich an den Umlenkbereich (9c) anschließt.

12. Verfahren zur Montage eines Kabelstranges (1) für einen als Schwenkmotor (8) ausgebildeten Aktuator eines Wankstabilisators nach einem der vorhergehenden Ansprüche, **gekennzeichnet durch** folgende Verfahrensschritte:
- Bereitstellen des Aktuators (8) mit Deckel (12), der eine Steckeraufnahmeöffnung (13) und eine Montageöffnung (14) aufweist, sowie eines Kabelstranges (1) mit Stecker (2),
- Einführen des radialen Schenkels (2a) des Steckers (2) in radialer Richtung in die Steckeraufnahmeöffnung (13),
- Befestigen der elektrischen Kontakte (3a, 4a, 5a) durch Zugang über die stirnseitig angeordnete Montageöffnung (14),
- Abdichten und Fixieren des Steckers (2) in radialer Richtung,
- Verlegen des Kabelstranges (1) auf dem Gehäuse (8a) und Fixieren des Kabelstranges (1) durch Positionieren eines Mantelbleches (9) und
- Befestigen des Mantelbleches (9) am Gehäuse (8a) durch Verspannen.

13. Verfahren nach Anspruch 12, **dadurch gekennzeichnet, dass** der Deckel (12) im Bereich der Schnittstelle (15) respektive der Montageöffnung (14) stoffschlüssig mit einem Ende (18a) einer Stabilisatorhälfte (18) verbunden wird.

14. Verfahren nach Anspruch 12 oder 13, **dadurch gekennzeichnet, dass** das zweite Ende (1b) des Kabelstranges (1) im Bereich des Kabelübergabepunktes (20) an das Bordnetz des Kraftfahrzeuges angeschlossen wird.

## Claims

1. Active roll stabilizer of a motor vehicle, comprising an actuator (8) which is configured as a pivoting motor (8), is arranged in the vehicle such that it can be moved rotationally about its longitudinal axis (a), and has a substantially cylindrical housing (8a) with a cover (12), further comprising two stabilizer halves (18, 19) which are connected on the end side to the actuator (8) for the transmission of a torque, a wiring harness (1) which has a first and a second end (1a, 1b) and comprises cables (3, 4, 5) for the transmission of electric power and signals, the first end (1a) being connected to the actuator (8) by means of a plug (2), and the second end (1b) being arranged in a stationary manner in the vehicle at a cable transfer point (20), **characterized in that** the cover (12) forms a dry space (12a) and has a plug receptacle opening (13) which is arranged on the circumferential side and into which the plug (2) can be introduced in the radial direction and can be fastened, the plug (2) having contacts (3a, 4a, 5a) which correspond with the cables (3, 4, 5), and the cover (12) having an interface (15) with one end (18a) of a stabilizer half (18) and an assembly opening (14) which is arranged on the end side in the region of the interface (15) and forms an access for the assembly of the contacts (3a, 4a, 5a).

2. Roll stabilizer according to Claim 1, **characterized in that** the plug is configured as an angled plug (2) and has a radial limb (2a) which is received by the plug receptacle opening (13) and an axial limb (2b) which is arranged outside the plug receptacle opening (13).

3. Roll stabilizer according to Claim 2, **characterized in that** the angled plug (2) is configured as an injection moulded plastic part which can be produced by way of overmoulding of the angled-away wiring harness (1).

4. Roll stabilizer according to Claim 2 or 3, **characterized in that** the wiring harness (1) is guided out of the axial limb (2b) of the plug (2) and is laid in the axial direction on the housing (8a).

5. Roll stabilizer according to Claim 4, **characterized in that** the wiring harness (1) can be laid from the plug (2) in the axial direction as far as a deflection region (9c) and, after the deflection region (9c), transversely or obliquely with respect to the axial direction (x) in the direction of the cable transfer point (20).

6. Roll stabilizer according to one of Claims 1 to 5, **characterized in that** the wiring harness (1) which is laid on the housing (8a) is guided through a shell (9) and is fixed.

7. Roll stabilizer according to Claim 6, **characterized in that** the shell (9) engages in regions around more than half of the circumference of the housing (8a) and is connected to the housing (8a) by means of clamping elements (10, 11) and/or fixing elements.

8. Roll stabilizer according to Claim 6 or 7, **characterized in that** the shell (9) has an integrally formed covering cap (9a) which engages over the angled plug (2).

9. Roll stabilizer according to Claim 6, 7 or 8, **characterized in that** the shell (9) has an embossment (9b, 9c, 9d) which runs in the longitudinal direction of the cables (3, 4, 5) for receiving and fixing the wiring harness (1).

10. Roll stabilizer according to Claim 9, **characterized in that** the embossment has a deflecting region (9c) and a region (9b) which runs in the axial direction (x).

11. Roll stabilizer according to Claim 10, **characterized in that** the embossment has an exit region (9d) which runs transversely or obliquely with respect to the axial direction (x) and adjoins the deflecting region (9c).

12. Method for assembling a wiring harness (1) for an actuator, configured as a pivoting motor (8), of a roll stabilizer according to one of the preceding claims, **characterized by** the following method steps:
- providing of the actuator (8) with a cover (12) which has a plug receptacle opening (13) and an assembly opening (14), and providing of a wiring harness (1) with a plug (2),
- introducing of the radial limb (2a) of the plug (2) in the radial direction into the plug receptacle opening (13),
- fastening of the electric contacts (3a, 4a, 5a) by way of access via the assembly opening (14) which is arranged on the end side,
- sealing and fixing of the plug (2) in the radial direction,
- laying of the wiring harness (1) on the housing (8a), and fixing of the wiring harness (1) by way of positioning of a shell (9), and
- fastening of the shell (9) to the housing (8a) by way of bracing.

13. Method according to Claim 12, **characterized in that** the cover (12) is connected in an integrally joined manner to one end (18a) of a stabilizer half (18) in the region of the interface (15) or the assembly opening (14).

14. Method according to Claim 12 or 13, **characterized in that** the second end (1b) of the wiring harness (1) is connected to the vehicle circuit of the motor vehicle in the region of the cable transfer point (20).

## Revendications

1. Stabilisateur antiroulis actif d'un véhicule automobile, comportant un actionneur (8) disposé dans le véhicule de manière mobile en rotation autour de son axe longitudinal (a) et réalisé sous forme de moteur pivotant (8), lequel actionneur comprend un boîtier (8a) sensiblement cylindrique doté d'un couvercle (12), deux moitiés de stabilisateur (18, 19), lesquelles sont reliées, côté frontal, à l'actionneur (8) pour transmettre un couple, un faisceau de câbles (1) comprenant une première et une deuxième extrémité (1a, 1b), lequel comporte des câbles (3, 4, 5) servant à la transmission de puissance électrique et de signaux, la première extrémité (1a) étant reliée à l'actionneur (8) au moyen d'un connecteur (2) et la deuxième extrémité (1b) étant disposée de manière fixe dans le véhicule en un point de transfert de câbles (20), **caractérisé en ce que** le couvercle (12) forme un espace sec (12a) et comprend une ouverture de logement de connecteur (13) disposée du côté périphérique, dans laquelle le connecteur (2) peut être introduit et peut être fixé dans la direction radiale, le connecteur (2) comprenant, du côté de son extrémité, des contacts (3a, 4a, 5a) correspondant aux câbles (3, 4, 5) et le couvercle (12) comprenant une interface (15) avec une extrémité (18a) d'une moitié de stabilisateur (18) ainsi qu'une ouverture de montage (14) disposée du côté frontal dans la zone de l'interface (15), laquelle ouverture de montage forme un accès pour le montage des contacts (3a, 4a, 5a).

2. Stabilisateur antiroulis selon la revendication 1, **caractérisé en ce que** le connecteur est réalisé sous forme de connecteur coudé (2) et comprend une branche (2a) radiale logée par l'ouverture de logement de connecteur (13) ainsi qu'une branche (2b) axiale disposée à l'extérieur de l'ouverture de logement de connecteur (13).

3. Stabilisateur antiroulis selon la revendication 2, **caractérisé en ce que** le connecteur coudé (2) est réalisé sous forme de pièce en matière synthétique moulée par injection, laquelle peut être produite par surmoulage du faisceau de câbles (1) coudé.

4. Stabilisateur antiroulis selon la revendication 2 ou 3, **caractérisé en ce que** le faisceau de câbles (1) est guidé hors de la branche axiale (2b) du connecteur (2) et est posé sur le boîtier (8a) dans la direction axiale.

5. Stabilisateur antiroulis selon la revendication 4, **caractérisé en ce que** le faisceau de câbles (1) peut être posé à partir du connecteur (2) dans la direction axiale jusqu'à une zone de déviation (9c) et, derrière la zone de déviation (9c), de manière transversale ou inclinée par rapport à la direction axiale (x) en direction du point de transfert de câbles (20).

6. Stabilisateur antiroulis selon l'une quelconque des revendications 1 à 5, **caractérisé en ce que** le faisceau de câbles (1) posé sur le boîtier (8a) est guidé et fixé au moyen d'une tôle d'enveloppe (9) .

7. Stabilisateur antiroulis selon la revendication 6, **caractérisé en ce que** la tôle d'enveloppe (9) enveloppe, dans certaines zones, plus de la moitié de la périphérie du boîtier (8a) et est reliée au boîtier (8a) au moyen d'éléments de serrage (10, 11) et/ou d'éléments de fixation.

8. Stabilisateur antiroulis selon la revendication 6 ou 7, **caractérisé en ce que** la tôle d'enveloppe (9) comprend un capuchon de recouvrement façonné (9a), lequel chevauche le connecteur coudé (2).

9. Stabilisateur antiroulis selon la revendication 6, 7 ou 8, **caractérisé en ce que** la tôle d'enveloppe (9) comprend un façonnage (9b, 9c, 9d) s'étendant dans la direction longitudinale des câbles (3, 4, 5) pour loger et fixer le faisceau de câbles (1).

10. Stabilisateur antiroulis selon la revendication 9, **caractérisé en ce que** le façonnage comprend une zone (9b) s'étendant dans la direction axiale (x) et une zone de déviation (9c).

11. Stabilisateur antiroulis selon la revendication 10, **caractérisé en ce que** le façonnage comprend une zone de départ (9d) s'étendant de manière transversale ou inclinée par rapport à la direction axiale (x), laquelle zone de départ se raccorde à la zone de déviation (9c).

12. Procédé de montage d'un faisceau de câbles (1) pour un actionneur, réalisé sous forme de moteur pivotant (8), d'un stabilisateur antiroulis selon l'une quelconque des revendications précédentes, **caractérisé par** les étapes de procédé suivantes :
- fourniture de l'actionneur (8) doté d'un couvercle (12), lequel couvercle comprend une ouverture de logement de connecteur (13) et une ouverture de montage (14), ainsi que d'un faisceau de câbles (1) doté d'un connecteur (2),
- introduction de la branche radiale (2a) du connecteur (2) dans la direction radiale dans l'ouverture de logement de connecteur (13),
- fixation des contacts électriques (3a, 4a, 5a) par accès par le biais de l'ouverture de montage (14) disposée du côté frontal,
- fermeture hermétique et fixation du connecteur (2) dans la direction radiale,
- pose du faisceau de câbles (1) sur le boîtier (8a) et fixation du faisceau de câbles (1) par positionnement d'une tôle d'enveloppe (9) et
- fixation de la tôle d'enveloppe (9) sur le boîtier (8a) par serrage.

13. Procédé selon la revendication 12, **caractérisé en ce que** le couvercle (12) est relié par liaison de matière à une extrémité (18a) d'une moitié de stabilisateur (18) dans la zone de l'interface (15), respectivement de l'ouverture de montage (14) .

14. Procédé selon la revendication 12 ou 13, **caractérisé en ce que** la deuxième extrémité (1b) du faisceau de câbles (1) est raccordée au réseau de bord du véhicule automobile dans la zone du point de transfert de câbles (20).
